# EUROPEAN PATENT APPLICATION

(11) **EP 1 060 660 A1**
(43) Date of publication of application: **20.12.2000**
(21) Application number: 00201651.7
(22) Date of filing: 08.05.2000
(51) Int. Cl.: A01K 11/00

(54) **Ear tag with fluid security feature**

(30) Priority: 07.05.1999 NL 1012001
(71) Applicant: Pragmatic Network Creations ETS., Vaduz (LI); HENDRIKX, Jacobus Gerardus Maria, NL-5242 HB Rosmalen (NL)
(72) Inventor: Hendrikx, Jacobus Gerardus Maria, 5242 HB Rosmalen (NL)
(74) Representative: Jorritsma, Ruurd

(57) **Abstract**

An ear tag for establishing the identity of an animal comprises at least one plate element (1), a pin (2), attached to the plate element (1), intended to be accommodated in a hole in the ear of the animal, and a counter-element (3) for locking the plate element (1) with pin (2) to the ear. At least one of the plate element (1), the pin (2) and the counter-element (3) has at least one reservoir (11,16) in which a fluid (14,17) is present, which reservoir (11,16) is breakable under effects which arise during an attempt to force, such that the fluid (14,17) is released and as a result gives rise to an indelible and detectable change to the ear tag.

## Description

The invention relates to an ear tag for establishing the identity of an animal, comprising at least one plate element, a pin, attached to the plate element, intended to be accommodated in a hole in the ear of the animal, and a counter-element for locking the plate element with pin to the ear.

Such ear tags are known. They are used to establish the identity of individual animals, in particular cattle. The data relating to the identity of animals are important, inter alia, for tracking down and combating certain diseases, such as BSE.

When combating such diseases it is particularly important to check which "family members" an animal has, so that any animals with hereditary problems can be rapidly tracked down. Moreover, in this context it is important that the owner, or previous owner, of the animal can be traced.

In practice it is found that the known system using ear tags is susceptible to fraud. Such fraud is mainly prompted by economic motives. Combating diseases in some cases compels the authorities to destroy the animals, which results in an appreciable loss for the cattle farmer concerned, despite the compensation given by the authorities.

Fraud frequently takes the form of tampering with the ear tags. With some effort, these can be removed from the animal and replaced by counterfeit ear tags without leaving any trace. The monitoring authority can thus be misled and it is possible that suspect animals remain undetected.

The aim of the invention is to provide an ear tag which is less susceptible to fraud of this type. This aim is achieved in that at least one of the plate element, the pin and the counter-element has at least one reservoir in which a fluid is present, which reservoir is breakable under effects which arise during an attempt to force, such that the fluid is released and as a result gives rise to an indelible and detectable change to the ear tag.

The knowledge that any attempts to force will leave behind a clear trace on the ear tag has a preventive effect. Consequently such attempts will decrease to an appreciable extent.

The fluid preferably comprises a liquid which can be incorporated in a liquid-permeable structure of the at least one of the plate element, the pin and the counter-element such that a permanent coloration is visible on the outside of the ear tag. As an alternative it is also possible to use a suitable gas.

The at least one reservoir has at least one nominal breaking edge. In particular, the reservoir extends through the pin. The pin forms that part of the ear tag which is substantially exposed to attempts to force and can be adequately protected in this way.

Nevertheless, there can also be a reservoir in the plate element. This reservoir can have a widened section and be accommodated in an openwork protective element.

The protective element is open at the end facing away from the pin and the reservoir is exposed in the plate element at this location.

If, as is customary, during an attempt to force tongs are used to try to push the pin out of the plate element, the exposed reservoir will be broken such that discoloration occurs. On the other hand, the protective element protects the reservoir against the normal effects and forces which arise when fitting the ear tag.

Furthermore, the protective element can have a slotted leg. This slotted leg is formed by the pin.

A further obstacle to possible sawing through of the pin is formed by a rotatable sleeve surrounding the pin. Preferably this sleeve is diabolo-shaped such that the saw "slips" and sawing is made more difficult.

Furthermore, a slotted leg can be formed by the pin. The pin can also be surrounded by a rotatable sleeve.

An embodiment in which the plate element is made at least partially of a porous material which adjoins the reservoir is preferred. The fluid is an ink which is sensitive to the air and which discolours if the reservoir is forced.

The invention will be described in more detail with reference to the following figures.
Figure 1 shows a first embodiment, in cross-section, of an ear tag according to the invention.
Figure 2 shows a second embodiment.
Figure 3 shows a third embodiment.
Figure 4 shows the pin, with ink reservoir, used with the ear tag according to Figure 1.

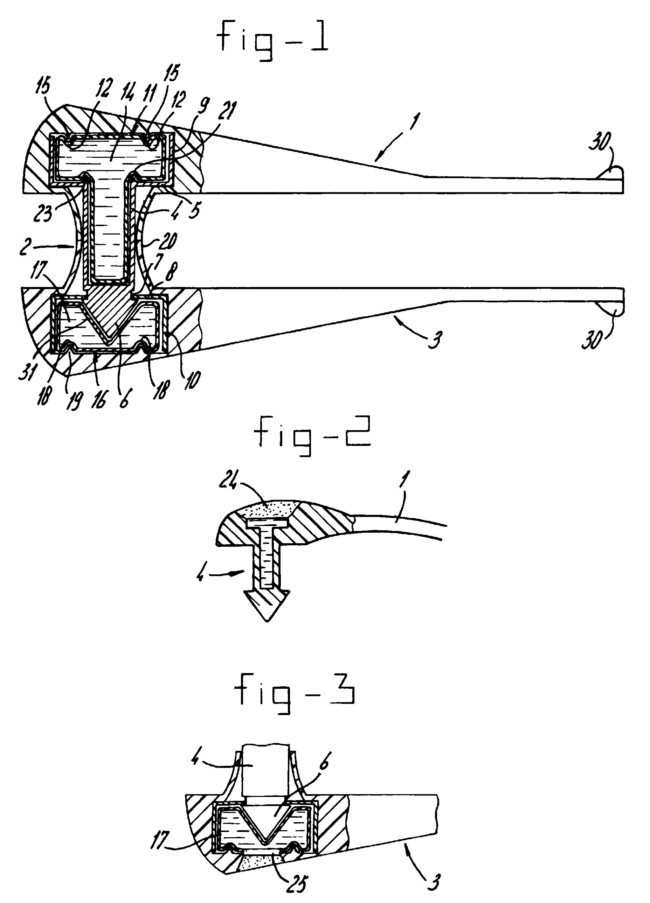

The ear tag shown in Figure 1 comprises a plate element 1, a pin 2 attached thereto, and a counter-element 3. Incidentally, the shape of this counter-element 3 is identical to the shape of the plate element 1.

The pin 2 comprises an inner sleeve 4, which is firmly fixed in the plastic material of the plate element 1 by means of the flange 5.

The inner sleeve 4 also has a head 6, which is of conical shape. This conical shape has a ridge 7, which is clicked behind the flange 8 which is incorporated in the plastic material of the counter-element 3.

The flange 5 is joined to a ring 9, whilst the flange 8 is joined to a ring 10.

An ink reservoir 11, which is T-shaped in cross-section, is accommodated in the space formed by inner sleeve 4, flange 5 and ring 9. This ink reservoir 11 has a nominal breaking edge 12. The reservoir contains a fluid 14, preferably indelible ink.

The ring 9 is closed off on the outside by the plastic material of the plate element 1, which has thickenings 15 opposite the nominal breaking edge 12.

A reservoir 16, which contains a fluid 17, is also accommodated in the counter-element, in the space defined by the flange 8 and the ring 10. This reservoir 16 also has a nominal breaking edge 18, opposite which nominal break location the thickenings 19 of the plastic material of the counter-element 13 are located. The reservoir 16 has a recessed region 31, into which the head 6 of the inner sleeve 4 extends.

In addition to the inner sleeve, the pin 2 has an outer sleeve 20 which is diabolo-shaped and is able to turn and thus makes attempts to force by means of sawing more difficult. First of all the outer sleeve turns with the attempts at sawing and, in addition, the saw has the tendency to shift towards the mid section, which, however, is difficult to reach because of the presence of an ear of an ear-tagged animal at this location.

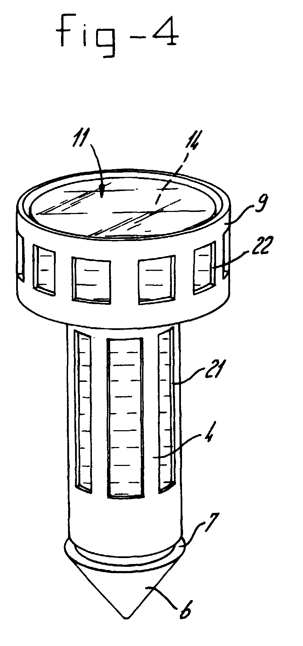

In the perspective view in Figure 4 the inner sleeve 4 with flange 5 and ring 9 are shown in more detail, as is also reservoir 11.

The inner sleeve 4 has a slot 21. As can also be seen, the ring 9 is not closed off at the top, such that the reservoir 11 is exposed at this location.

If an attempt is made to force the ear tag, the fluid 14 will escape, for example because the thickenings 15 and also 23 come into contact with the reservoir 11. The, preferably porous, material of the plate element 1 is discoloured as a result, such that visible signs of the attempt to force remain behind. Also, if the reservoir breaks at the location of the inner sleeve 4, the fluid will flow out via the open slot 21 and, as a result of the porous nature of the plate element 1, become visible on the outside.

The same applies in the case of the reservoir 16 which is located in the counter-element 3.

According to the variant in Figure 2, the plate element 1, like the counter-element 3, which is not shown, can be provided with a translucent part 24, for example obtained by means of two-component injection moulding. In this case the reservoir 11 contains ink sensitive to the air. As soon as the reservoir 11 is broken, the ink flows out, as a result of which it is exposed to the air. As a consequence of this, discoloration of the ink occurs, which is detectable through the translucent part 24.

According to the variant in Figure 3, the reservoir 17 of the counter-element 3 can be covered by a translucent plate 25, which has been co-injection moulded in the counter-element 3.

Both the plate element 1 and the counter-element 3 can have an edge reinforced by means of one or more ribs 30. These ribs prevent said elements 1, 3 being rolled up and subsequent removal of the ear tag via the hole in the ear of the animal.

An elongated transponder or chip can, for example, have been accommodated in the rib(s). Removal of said rib(s) would then result in damage to the transponder or chip, as a result of which fraud is made additionally difficult. The ear tag can then no longer be detected electronically.

Removal of the pin and the like is made additionally more difficult if the elements 1, 3 have corrugations and/or holographic images at the location of their mutual snap-fit joint. In the case of attempted manipulation such corrugations/images would be irreparably damaged.

## Claims

1. Ear tag for establishing the identity of an animal, comprising at least one plate element (1), a pin (2), attached to the plate element, intended to be accommodated in a hole in the ear of the animal, and a counter-element (3) for locking the plate element (1) with pin (2) to the ear, characterised in that at least one of the plate element (1), the pin (2) and the counter-element (3) has at least one reservoir (11, 16) in which a fluid (14, 17) is present, which reservoir (11, 16) is breakable under effects which arise during an attempt to force, such that the fluid (14, 17) is released and as a result gives rise to an indelible and detectable change to the ear tag.

2. Ear tag according to Claim 1, wherein the fluid (14, 17) comprises a liquid which can be incorporated in a liquid-permeable structure of the at least one of the plate element (1), the pin (2) and the counter-element (3) such that a permanent coloration is visible on the outside of the ear tag.

3. Ear tag according to Claim 1 or 2, wherein the at least one reservoir (11, 16) has at least one nominal breaking edge (12, 19, 23).

4. Ear tag according to one of the preceding claims, wherein a reservoir (11) extends through the pin (2).

5. Ear tag according to one of the preceding claims, wherein a reservoir (11) is located in at least the plate element (1).

6. Ear tag according to Claims 4 and 5, wherein a reservoir (11) is located both in the pin (2) and in the plate element (1).

7. Ear tag according to Claim 6, wherein the reservoir (11) in the plate element (1) has a widened section.

8. Ear tag according to one of the preceding claims, wherein the reservoir (11, 16) is accommodated in an openwork or permeable protective element.

9. Ear tag according to Claim 8, wherein the protective element is open at the end facing away from the pin (2) and the reservoir (11) is exposed in the plate element (1) at this location.

10. Ear tag according to Claim 8 or 9, wherein the protective element has a slotted leg (4).

11. Ear tag according to Claim 8, wherein the slotted leg (4) is formed by the pin (2).

12. Ear tag according to Claim 11, wherein the pin (2) is surrounded by a rotatable sleeve (20).

13. Ear tag according to Claim 12, wherein the sleeve (20) is diabolo-shaped.

14. Ear tag according to one of the preceding claims, wherein a reservoir (16) is located in the counter-element (3), which reservoir (16) has a recessed region (31) into which the head (6) of the pin (2) extends.

15. Ear tag according to Claim 14, wherein the reservoir (16) in the counter-element (3) is surrounded by an openwork or permeable protective element (8, 10).

16. Ear tag according to Claim 15, wherein the protective element is open at the end facing away from the pin (2) and the reservoir (11) is exposed in the plate element (1) at this location.

17. Ear tag according to one of the preceding claims, wherein the plate element (1) is made at least partially of a porous material which adjoins the reservoir.

18. Ear tag according to one of the preceding claims, wherein the fluid (14, 17) is an ink which is sensitive to the air and which discolours when the reservoir (11, 16) is forced.
